# EUROPEAN PATENT APPLICATION

(11) **EP 4 636 865 A1**
(43) Date of publication of application: **22.10.2025**
(21) Application number: 23903737.7
(22) Date of filing: 30.10.2023
(51) Int. Cl.: H01M 4/525, H01M 4/505, H01M 4/131, H01M 10/052, H01M 4/02

(54) **POSITIVE ELECTRODE ACTIVE MATERIAL PRECURSOR FOR LITHIUM SECONDARY BATTERY, POSITIVE ELECTRODE ACTIVE MATERIAL, AND LITHIUM SECONDARY BATTERY COMPRISING SAME**

(30) Priority: 16.12.2022 KR 20220177300
(71) Applicant: POSCO Holdings Inc., Seoul 06194 (KR); Research Institute of Industrial Science & Technology, Pohang-si, Gyeongsangbuk-do 37673 (KR); Posco Future M Co., Ltd., Pohang-si, Gyeongsangbuk-do 37918 (KR)
(72) Inventor: LEE, Sanghyuk, Incheon 22405 (KR); LEE, Seonhwa, Incheon 21982 (KR); HONG, Ki Joo, Incheon 21986 (KR); KIM, Ju Seong, Seoul 07542 (KR); NAM, Sang Cheol, Seoul 02587 (KR)
(74) Representative: Pfenning, Meinig & Partner mbB
(86) International application number: PCT/KR2023/017022
(87) International publication number: WO 2024/128534

(57) **Abstract**

A positive electrode active material precursor for a lithium secondary battery according to an embodiment of the present disclosure includes metal hydroxide. The positive electrode active material precursor has a specific surface area of 25 m²/g or more.

## Description

### [Technical Field]

The present embodiments relate to a positive electrode active material precursor for a lithium secondary battery, the positive electrode active material, and a lithium secondary battery including the same.

### [Background Art]

As an environmental problem has recently become serious, an electric vehicle is attracting attention as one of solutions for overcoming the environmental problem. Due to explosive demand for the electric vehicle and demand for increasing a mileage of the electric vehicle, development of the secondary battery with a high capacity and a high energy density corresponding thereto is actively underway worldwide.

To meet the requirement, an NCM positive electrode material having a high Ni content is used, and to improve a density of a pole plate of the electrode, research on the secondary battery in which a bimodal positive electrode active material in which large and small particles are mixed at a predetermined fraction is applied is active.

However, a large-particle positive electrode material including a secondary particle in which primary particles are aggregated has a large specific surface area of a powder so that it has a large contact area with an electrolyte. Thus, it generates a large amount of gas to have a problem of reducing a life of the battery. Because a small-particle positive electrode material including a secondary particle has weak strength, there is a problem in which small particles are broken in primary particles so that there is a problem in which a life of the battery is reduced.

To solve the problem, a method for manufacturing a positive electrode active material in a form of a single particle by increasing a size of the primary particle has been proposed.

However, a currently developed single particle has a problem with deterioration in performance across an electrochemical characteristic such as lifespan, a resistance increase rate, or thermal safety.

### [DETAILED DESCRIPTION OF THE INVENTION]

### [Technical Problem]

The present embodiment provides a positive electrode active material having an excellent life characteristic, a reduced resistance increase rate, and reduced gas generation, a method for manufacturing the same, and a lithium secondary battery including the same.

### [Technical Solution]

A positive electrode active material precursor for a lithium secondary battery according to an embodiment of the present disclosure includes metal hydroxide. The positive electrode active material precursor has a specific surface area of 25 m²/g or more. The specific surface area of the positive electrode active material precursor may be in a range of 28 to 50 m²/g.

An average particle diameter (D50) of the precursor may be in a range of 2 to 6 µm.

The metal hydroxide may include nickel, cobalt, and manganese.

A content of the nickel may be 0.8 mol or more based on a total amount of 1 mol of the nickel, the cobalt, and the manganese.

A positive electrode active material for a lithium secondary battery according to an embodiment of the present disclosure includes metal oxide including a single particle. The positive electrode active material has a packing density of 3.1 g/cc or more. The packing density may be in a range of 3.15 to 3.5 g/cc.

The metal oxide may include nickel, cobalt, and manganese.

A content of the nickel may be 0.8 mol or more based on a total amount of 1 mol of the nickel, the cobalt, and the manganese.

An average particle diameter (D50) of the positive electrode active material may be in a range of 5 to 15 µm.

A positive electrode for a lithium secondary battery according to an embodiment of the present disclosure includes: a current collector; and a positive electrode active material layer that is disposed on at least one surface of the current collector and includes the positive electrode active material.

A density of a pole plate of the positive electrode is in a range of 3.5 to 4.0 g/cc.

A lithium secondary battery according to an embodiment of the present disclosure includes the positive electrode.

### [Advantageous Effects]

An embodiment may manufacture a high-nickel medium-particle diameter single-particle positive electrode active material having nickel of 80 mol% or more, and may remarkably improve lifespan, an initial resistance, a resistance increase rate, and thermal safety using the active material. In addition, an amount of gas generated during driving may be drastically reduced.

In addition, it may realize a packing density equal to or greater than that of a multiparticle positive electrode active material so that an energy density per volume of a lithium secondary battery is increased.

Therefore, it is possible to improve stability while finally reducing a volume of the lithium secondary battery.

### [Description of the Drawings]

FIG. 1 shows a result of performing SEM analysis measured at x10,000 times on a positive electrode active material precursor manufactured in Embodiment 2.
FIG. 2 shows a result of performing SEM analysis measured at x25,000 times on a cross-section of the positive electrode active material precursor manufactured in Embodiment 2 after it is milled with Focused Ion Beam (FIB, SEIKO 3050SE).
FIG. 3 shows a result of performing SEM analysis measured at x3,000 times on a positive electrode active material precursor manufactured in Comparative Example 3.
FIG. 4 shows a result of performing SEM analysis measured at x5,000 times on a cross-section of the positive electrode active material precursor manufactured in Comparative Example 3 after it is milled with Focused Ion Beam (FIB, SEIKO 3050SE).
FIG. 5 shows a result of performing SEM analysis measured at x1,000 times on a positive electrode active material of Embodiment 2.
FIG. 6 shows a result of performing SEM analysis measured at x10,000 times on the positive electrode active material of Embodiment 2.
FIG. 7 shows a result of performing SEM analysis measured at x1,000 times on a positive electrode active material of Comparative Example 3.
FIG. 8 shows a result of performing SEM analysis measured at x10,000 times on the positive electrode active material of Comparative Example 3.
FIG. 9 shows a result of performing SEM analysis measured at x1,000 times on a positive electrode active material of Comparative Example 4.
FIG. 10 shows a result of performing SEM analysis measured at x10,000 times on the positive electrode active material of Comparative Example 4.
FIG. 11 is a view for describing a method for measuring a packing density.

### [BEST MODE FOR INVENTION]

Terms such as "first", "second", and "third" are used herein to describe various portions, components, regions, layers, and/or sections, but are not limited thereto. The terms are used only to distinguish one portion, component, region, layer, or section from another portion, component, region, layer, or section. Accordingly, a first portion, component, region, layer, or section described below may be referred to as a second portion, component, region, layer, or section within a scope that does not depart from a scope of the present disclosure.

A technical term used herein is intended only to refer to a specific embodiment, and is not intended to limit the present disclosure. Singular forms used herein also include plural forms unless phrases clearly indicate an opposite meaning. A term "include" used in the specification specifies a specific characteristic, region, integer, step, operation, element, and/or component, and does not exclude presence or addition of another characteristic, region, integer, step, operation, element, and/or component.

When it is said that a portion is "on" or "above" another portion, the portion may be disposed directly on or above the other portion, or another portion may be interposed therebetween. In contrast, when a portion is said to be "directly above" another portion, no other portion is interposed therebetween.

Although not otherwise defined, all terms used herein, including a technical term and a scientific term, have the same meanings as those generally understood by a person of ordinary skill in the art to which the present disclosure belongs. Terms defined in a dictionary commonly used are additionally interpreted to have a meaning consistent with the relevant technical literature and the presently disclosed contents, and are not interpreted in an ideal or very formal sense unless otherwise defined.

A positive electrode active material precursor for a lithium secondary battery according to an embodiment may include metal hydroxide, and may have a specific surface area according to a Brauner-Emmett-Teller (BET) method of 25 m²/g or more. For example, the specific surface area of the positive electrode active material precursor may be in a range of 28 to 50 m²/g.

An average particle diameter (D50) of the precursor may be in a range of 2 to 6 µm or 3 to 5 µm.

As described above, a currently developed single particle has a problem in which various electrochemical performances are deteriorated. One of reasons for the poor electrochemical performances is that a slurry manufactured for forming an electrode maintains a high viscosity because the average particle diameter (D50) of the currently developed single particle has a small particle diameter of about 1 to 5 µm.

In order to solve a problem of degrading thermal stability and increasing an amount of gas generated when a multiparticle positive electrode active material is used and to solve a problem of increasing a viscosity of a slurry when a single-particle positive electrode active material is used, the present embodiment proposes a medium-particle diameter single-particle positive electrode active material having the average particle diameter (D50) of about 6 to 15 µm by increasing the average particle diameter (D50) compared with the currently developed single particle.

For example, in order to manufacture a medium-particle diameter positive electrode active material, it is important to improve internal porosity and crystallinity in a step of manufacturing the positive electrode active material precursor. For example, a high-speed co-precipitation process may be used to manufacture a precursor having porosity. If the specific surface area and the average particle diameter (D50) of the positive electrode active material precursor satisfy the above range in the present embodiment, the average particle diameter (D50) of the positive electrode active material manufactured using the satisfied specific surface area and average particle diameter (D50) may be increased.

The metal hydroxide may include nickel, cobalt, and manganese.

In this case, a content of the nickel may be 0.8 mol or more based on a total amount of 1 mol of the nickel, the cobalt, and the manganese. For example, the content of the nickel may be in a range of 0.85 to 0.99 or 0.87 to 0.99.

If the content of the nickel within the metal hydroxide is 0.8 mol or more as in the present embodiment, the positive electrode active material having a high output characteristic may be implemented. That is, the positive electrode active material manufactured using the positive electrode active material precursor of the present embodiment having the composition may have a high energy density per volume, so that a capacity of the battery to which the positive electrode active material is applied may be improved and the positive electrode active material may be very suitable for an electric vehicle.

A positive electrode active material for the lithium secondary battery according to an embodiment may include metal oxide including a single particle. In this case, a packing density of the positive electrode active material may be 3.1 g/cc or more or in a range of 3.15 to 3.5 g/cc.

In the present specification, the packing density may refer to a value measured by applying a pressure of 4.5 tons after a circular pellet with a diameter of 13 mm using the positive electrode active material is manufactured.

If the packing density of the positive electrode active material satisfies the above range, a density of a pole plate of the positive electrode manufactured using the satisfied packing density may be further increased. Accordingly, an energy density of the lithium secondary battery may be improved, and as a result, if the positive electrode of the present embodiment is applied to an electric vehicle, the positive electrode of the present embodiment may have an advantageous effect in that a mileage of the electric vehicle is dramatically increased.

The positive electrode active material may include metal oxide including a single particle, and the metal oxide may include nickel, cobalt, and manganese.

Because a composition of the metal oxide is the same as the composition of the metal hydroxide of the precursor described above, a detailed description thereof will be omitted here.

If necessary, the metal oxide may further include a doping element. For example, the doping element may be at least one selected from the group consisting of Zr, Al, B, P, La, Ta, Ti, W, Mo, Si, Ga, Zn, Nb, Ag, Sn, Bi, Au, Y, Ge, V, Cr, and Fe. Considering an electrochemical characteristic to be secured in a battery using the positive electrode active material of the present embodiment, one of doping elements may be selected and applied.

The average particle diameter (D50) of the positive electrode active material may be in a range of 6 to 15 µm or 6 to 11 µm. The single-particle positive electrode active material having a medium particle diameter may be manufactured, so that an amount of gas generated is drastically reduced and simultaneously the lithium secondary battery having an excellent electrochemical characteristic such as lifespan, an initial resistance, or a resistance increase rate is realized. In addition, because thermal stability of the battery is very excellent and an energy density per volume thereof is also increased, it may have a very advantageous effect.

The positive electrode active material of the above-described embodiment may be manufactured by manufacturing the positive electrode active material precursor including the metal hydroxide and then firing a mixture in which lithium raw materials are uniformly mixed.

Here, the metal hydroxide may be manufactured using a co-precipitation method. For example, after a metal salt aqueous solution including a nickel raw material, a cobalt raw material, a manganese raw material, and water is manufactured, the metal salt aqueous solution may be supplied to a co-precipitation reactor and then a complexing agent and a precipitating agent may be injected to manufacture the metal hydroxide.

In this case, high-speed co-precipitation may be performed and simultaneously a flow amount of a sulfuric acid-metal solution may be controlled, so that a porous positive electrode active material precursor having a specific surface area value described above is manufactured.

In another embodiment, a positive electrode including a positive electrode active material layer including the positive electrode active material according to the embodiment of the present disclosure described above, is provided.

In this case, a density of a pole plate of the positive electrode may be in a range of 3.5 to 4.0 g/cc. If the density of the pole plate satisfies the above range, the energy density of the lithium secondary battery may be remarkably improved. Therefore, if the positive electrode according to the present embodiment is applied to an electric vehicle, the positive electrode may dramatically increase a mileage of the electric vehicle.

The present embodiment may provide a lithium secondary battery including the positive electrode, a negative electrode including a negative electrode active material, and an electrolyte disposed between the positive electrode and the negative electrode.

A description related to the positive electrode active material will be omitted because it is the same as the above-described embodiment of the present disclosure.

The positive electrode active material layer may include a binder and a conductive material.

The binder may serve to attach positive electrode active material particles to each other well and to attach the positive electrode active material to a current collector well.

The conductive material may be used to impart conductivity to the electrode, and any material that does not cause a chemical change and is electronically conductive may be used in the battery.

The negative electrode may include a current collector and a negative electrode active material layer formed on the current collector, and the negative electrode active material layer may include a negative electrode active material.

The negative electrode active material may include a material capable of reversibly intercalating/deintercalating a lithium ion, a lithium metal, an alloy of a lithium metal, a material capable of doping and dedoping lithium, or transition metal oxide.

The material capable of reversibly intercalating/deintercalating the lithium ion may be a carbon material, any carbon-based negative electrode active material generally used in a lithium ion secondary battery may be used, and a representative example thereof may include crystalline carbon, amorphous carbon, or a combination thereof.

The alloy of the lithium metal may include an alloy of lithium and a metal selected from the group consisting of Na, K, Rb, Cs, Fr, Be, Mg, Ca, Sr, Si, Sb, Pb, In, Zn, Ba, Ra, Ge, Al, and Sn.

The material capable of doping and dedoping the lithium may include Si, SiOₓ (0 < x < 2), a Si-Y alloy (wherein Y is an element selected from the group consisting of an alkali metal, an alkaline-earth metal, a Group 13 element, a Group 14 element, a transition metal, a rare earth element, and a combination thereof, and not Si), Sn, SnO₂, Sn-Y (wherein Y is an element selected from the group consisting of an alkali metal, an alkaline-earth metal, a Group 13 element, a Group 14 element, a transition metal, a rare earth element, and a combination thereof, and not Sn).

The transition metal oxide may include vanadium oxide, lithium vanadium oxide, or the like. The negative electrode active material layer may include a binder, and may optionally further include a conductive material.

The binder may serve to attach negative electrode active material particles to each other well and to attach the negative electrode active material to a current collector well.

The conductive material may be used to impart conductivity to the electrode, and any material that does not cause a chemical change and is electronically conductive may be used in the battery.

The current collector may be selected from the group consisting of a copper foil, a nickel foil, a stainless steel foil, a titanium foil, a nickel foam, a copper foam, a polymer substrate coated with a conductive metal, and a combination thereof.

The negative and positive electrodes may be manufactured by mixing an active material, a conductive material, and a binder in a solvent to manufacture an active material composition and applying the composition to a current collector. Because the method for manufacturing the electrode is widely known in the art, a detailed description thereof will be omitted in the present specification. The solvent may be N-methylpyrrolidone or the like, but is not limited thereto.

The electrolyte may include a non-aqueous organic solvent and a lithium salt.

The non-aqueous organic solvent may serve as a medium through which ions involved in an electrochemical reaction of the battery may move.

The lithium salt may be a material that is dissolved in an organic solvent to serve to enable a basic operation of the lithium secondary battery by acting as a supply source of a lithium ion within the battery and to serve to promote a movement of the lithium ion between the positive and negative electrodes.

A separator may exist between the positive and negative electrodes depending on a type of the lithium secondary battery. Polyethylene, polypropylene, polyvinylidene fluoride, or multilayer films of two or more layers thereof may be used as the separator, and a mixed multilayer film such as a polyethylene/polypropylene two-layer separator, a polyethylene/polypropylene/polyethylene three-layer separator, or a polypropylene/polyethylene/polypropylene three-layer separator may be used as the separator.

The lithium secondary battery may be classified into a lithium ion battery, a lithium ion polymer battery, and a lithium polymer battery depending on types of the separator and the electrolyte used, may be classified into a cylindrical shape, a prismatic shape, a coin shape, a pouch type, and the like depending on a shape thereof, and may be divided into a bulk type and a thin film type depending on a size thereof. Because a structure and a manufacturing method of the battery are widely known in the art, a detailed description thereof will be omitted.

### [MODE FOR INVENTION]

Hereinafter, embodiments of the present disclosure will be described in detail. However, this is provided as an example, the present disclosure is not limited thereto, and the present disclosure is defined only by the scope of the claims described below.

### Comparative Example 1

### (1) manufacturing of positive electrode active material precursor

NiSO₄·6H₂O is used as the nickel raw material, CoSO₄·7H₂O is used as the cobalt raw material, and MnSO₄·H₂O is used as the manganese raw material. The raw materials are dissolved in distilled water to manufacture an aqueous metal salt solution.

After a co-precipitation reactor is prepared, N₂ is purged to prevent oxidation of a metal ion during a co-precipitation reaction, and a temperature of the reactor is maintained at 50°C.

NH₄(OH) is added as a chelating agent to the co-precipitation reactor, and NaOH is used to adjust pH. A precipitate obtained through a co-precipitation process is filtered, is washed with distilled water, and then is dried in an oven at 100°C for 24 hours to manufacture the positive electrode active material precursor.

A pH range of the co-precipitation step is in a range of 11.0 to 12.0.

A total co-precipitation time is 40 hours, and a precursor having a composition of (NiₓCo_{y}Mn_{z})(OH)₂ (x = 0.80, y = 0.1, and z = 0.1) is manufactured by a concentration process. In this case, a flow amount of the sulfuric acid-metal solution is 10 L/hr.

The precursor having the composition of (NiₓCo_{y}Mn_{z})(OH)₂ is grown to the average particle diameter (D50) of 2 to 6 µm.

### (2) manufacturing of positive electrode active material

LiOH·H₂O (Samchun Chemicals, a battery grade) is uniformly mixed with the precursor manufactured in (1) manufacturing of positive electrode active material precursor at a molar ratio of 1:1.07, and then the mixture is fired in a box-shaped firing furnace into which oxygen is introduced at 40 mL/min.

For example, after first firing at 480°C for 5 hours, second firing is performed at 700 to 780°C for 12 hours, and a heating speed is 2.5°C/min.

A composition of the manufactured positive electrode active material is LiNi_{0.80}Co_{0.10}Mn_{0.10}O₂.

### Embodiments 1 to 4 and Comparative Examples 2 to 8

The positive electrode active material precursor and the positive electrode active material are manufactured in the same method as that of Comparative Example 1 except that a composition of nickel, cobalt, and manganese, a co-precipitation time during manufacturing of the precursor, a flow amount of the sulfuric acid-metal solution during manufacturing of the precursor, and secondary firing temperature and holding time during manufacturing of the active material are adjusted as shown in Table 1 below.

**(Table 1)**

| Classific ation | Composition of nickel, cobalt, and manganese | Co-precipitation time during manufacturin g of precursor (hr) | Flow amount of sulfuric acid-metal solution during manufacturing of precursor (L/hr) | Secondary firing temperature and holding time (hr) |
|---|---|---|---|---|
| Compar ative Exampl e 1 | Ni_{0.80}Co_{0.10}Mn_{0.10} | 40 | 10 | 700-780, 12 |
| Compar ative Exampl e 2 | Ni_{0.80}Co_{0.10}Mn_{0.10} | 40 | 10 | 800-900, 12 |
| Embodi ment 1 | Ni_{0.80}Co_{0.10}Mn_{0.10} | 10 | 40 | 700-780, 12 |
| Compar ative Exampl e 3 | Ni_{0.85}Co_{0.075}Mn_{0.075} | 40 | 10 | 700-780, 12 |
| Compar ative Exampl e 4 | Ni_{0.85}Co_{0.075}Mn_{0.075} | 40 | 10 | 800-900, 12 |
| Embodi ment 2 | Ni_{0.85}Co_{0.075}Mn_{0.075} | 10 | 40 | 700-780, 12 |
| Compar ative Exampl e 5 | Ni_{0.90}Co_{0.05}Mn_{0.05} | 40 | 10 | 700-780, 12 |
| Compar ative Exampl e 6 | Ni_{0.90}Co_{0.05}Mn_{0.05} | 40 | 10 | 800-900, 12 |
| Embodi ment 3 | Ni_{0.90}Co_{0.05}Mn_{0.05} | 10 | 40 | 700-780, 12 |
| Compar ative Exampl e 7 | Ni_{0.95}Co_{0.025}Mn_{0.025} | 40 | 10 | 700-780, 12 |
| Compar ative Exampl e 8 | Ni_{0.95}Co_{0.025}Mn_{0.025} | 40 | 10 | 800-900, 12 |
| Embodi ment 4 | Ni_{0.95}Co_{0.025}Mn_{0.025} | 10 | 40 | 700-780, 12 |

### Experimental Example 1 - measurement of electrochemical characteristic

### (1) manufacturing of coin-type half-cell

A CR2032 coin cell is manufactured using the positive electrode active material manufactured as described above, and then electrochemical evaluation is performed.

For example, a positive electrode active material, a conductive material (e.g., Denka Black), and a polyvinylidene fluoride binder (a product name: KF1100) are mixed at a weight ratio of 96.5:1.5:2, and the mixture is added to an N-methyl-2-pyrrolidone solvent so that a solid content is about 30% by weight to manufacture a positive electrode active material slurry.

The slurry is coated on an aluminum foil that is a positive electrode collector and has a thickness of 15 µm using a doctor blade, is dried, and then is rolled to manufacture the positive electrode. A loading amount of the positive electrode is about 16.8 mg/cm², and a density of the rolling is about 3.6 g/cm³.

A 2032 coin-type half-cell is manufactured using the positive electrode, a lithium metal negative electrode (300 µm thick, MTI), an electrolyte, and a polypropylene separator by a conventional method. The electrolyte is a mixed solution in which 1M LiPF₆ is dissolved in a mixed solvent of ethylene carbonate, dimethyl carbonate, and ethylmethyl carbonate (EMC) having a mixing ratio of EC:DMC:EMC=3:4:3 volume%.

### (2) evaluation of charging and discharging characteristic

After the coin-type half-cell manufactured in (1) manufacturing of positive electrode active material precursor is aged at a room temperature (25°C) for 10 hours, a charging and discharging test is performed.

Capacity evaluation is performed using 200 mAh/g as a standard capacity, and a charging and discharging condition is a constant current-constant voltage within a range of 3.0 V to 4.3 V under a cut-off condition of 1/20 C. An initial capacity is measured by performing 0.2C charging/0.2C discharging after 0.1C charging/0.1C discharging.

### (3) evaluation of room temperature and high temperature cycle life characteristic

A room temperature cycle life characteristic is measured 30 times at a room temperature (25°C) under a 1.0C charging/1.0C discharging condition, and a high temperature cycle life characteristic is measured 30 times at a high temperature (45°C) under the 1.0C charging/1.0C discharging condition.

### (4) measurement of initial resistance and resistance increase rate

A room temperature initial resistance (e.g., a direct current internal resistance (DC-IR)) is calculated by measuring a voltage value after 60 seconds elapse after a discharging current is applied in 100% charging of 4.25V according to a charging and discharging cycle of the battery at 25°C.

A high-temperature resistance increase rate is recorded by converting an increase rate of a resistance measured in the same method as an initial resistance measurement method after 30 cycles with respect to a resistance (e.g., a high-temperature initial resistance) initially measured at a high temperature (45°C) as a percentage (%).

### (5) measurement of average leakage current

An average leakage current is an average value of currents measured during 120 hours when the coin cell is maintained at 4.7 V at a high temperature of 55°C.

**(Table 2)**

| Classif ication | Room temperat ure life (%) | High-temperat ure life (%) | Room temperature initial resistance (Ω) | High-temper ature resistan ce increas e rate (%) | Average leakage current (mA) | DSC peak temper ature (°C) |
|---|---|---|---|---|---|---|
| Comp arative Exam ple 1 | 97.6 | 95.2 | 28.6 | 48.1 | 0.25 | 228.5 |
| Comp arative Exam ple 2 | 99.6 | 98.6 | 13.6 | 21.6 | 0.18 | 231.1 |
| Embo diment 1 | **99.7** | **98.5** | **13.7** | **15.7** | **0.18** | **235.5** |
| Comp arative Exam ple 3 | 96.5 | 92.8 | 33.7 | 113.7 | 0.51 | 220.1 |
| Comp arative Exam ple 4 | 98.6 | 96.6 | 13.2 | 42.1 | 0.31 | 225.8 |
| Embo diment 2 | **98.9** | **97.1** | **14.5** | **37.5** | **0.29** | **229.6** |
| Comp arative Exam ple 5 | 85.2 | 80.8 | 38.2 | 370.1 | 0.98 | 210.8 |
| Comp arative Exam ple 6 | 92.6 | 89.6 | 20.1 | 76.5 | 0.42 | 215.8 |
| Embo diment 3 | **94.8** | **92.1** | **21.6** | **43.7** | **0.34** | **220.1** |
| Comp arative Exam ple 7 | 40.6 | 35.1 | 49.6 | 450.6 | 1.95 | 200.7 |
| Comp arative Exam ple 8 | 81.2 | 79.6 | 24.5 | 101.5 | 0.68 | 210.1 |
| Embo diment 4 | **86.7** | **83.1** | **25.1** | **56.2** | **0.47** | **214.5** |

Referring to Table 2, it may be seen that positive electrode active materials manufactured according to Embodiments 1 to 4 have an excellent room temperature life, an excellent high-temperature life, a remarkably lower room temperature initial resistance, and a remarkably lower resistance increase rate compared with Comparative Examples 1 to 8. In addition, it may be confirmed that the average leakage current and thermal stability of Embodiments 1 to 4 are improved compared with Comparative Examples 1 to 8.

### Experimental Example 2 - particle analysis

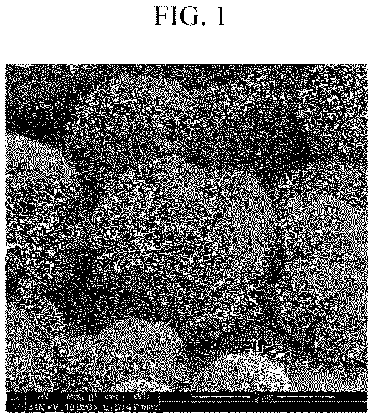

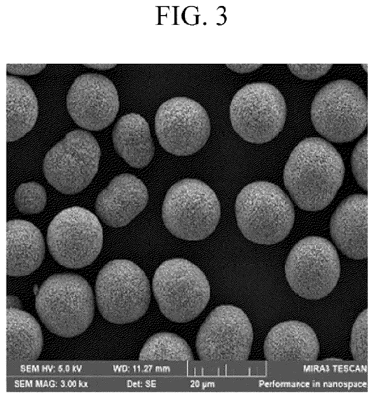

FIG. 1 shows a result of performing SEM analysis measured at x10,000 times on the positive electrode active material precursor manufactured in Embodiment 2, and FIG. 3 shows a result of performing SEM analysis measured at x3,000 times on a positive electrode active material precursor manufactured in Comparative Example 3.

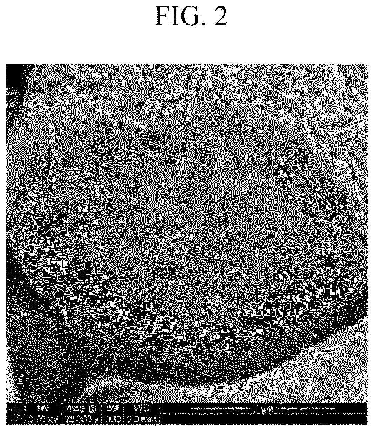

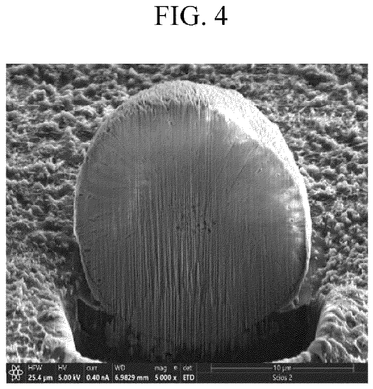

FIG. 2 shows a result of performing SEM analysis measured at x25,000 times on a cross-section of the positive electrode active material precursor manufactured in Embodiment 2 after it is milled with Focused Ion Beam (FIB, SEIKO 3050SE), and FIG. 4 shows a result of performing SEM analysis measured at x5,000 times on a cross-section of the positive electrode active material precursor manufactured in Comparative Example 3 after it is milled with Focused Ion Beam (FIB, SEIKO 3050SE).

Referring to FIGS. 1 to 4, it may be confirmed with the naked eye that the precursor of Embodiment 2 includes more pores than those of the precursor manufactured according to Comparative Example 3.

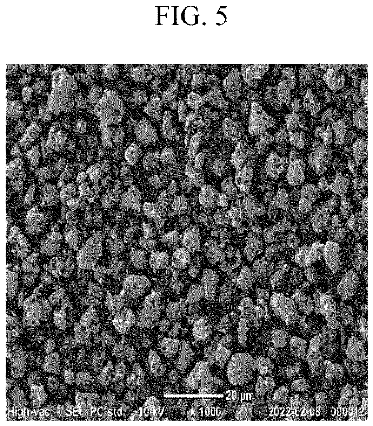

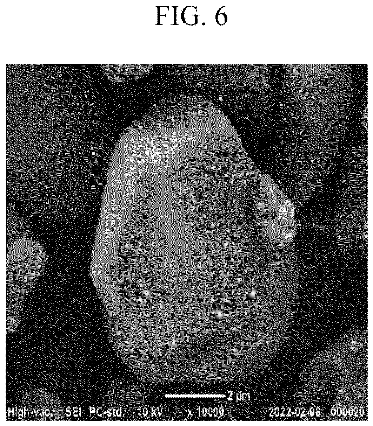

FIG. 5 shows a result of performing SEM analysis measured at x1,000 times on a positive electrode active material of Embodiment 2, and FIG. 6 shows a result of performing SEM analysis measured at x10,000 times on the positive electrode active material of Embodiment 2.

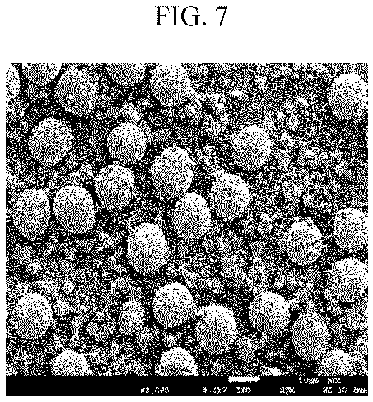

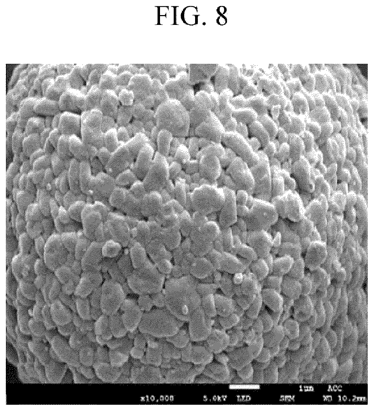

FIG. 7 shows a result of performing SEM analysis measured at x1,000 times on a positive electrode active material of Comparative Example 3, and FIG. 8 shows a result of performing SEM analysis measured at x10,000 times on the positive electrode active material of Comparative Example 3.

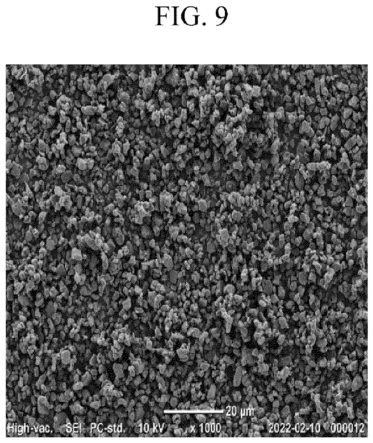

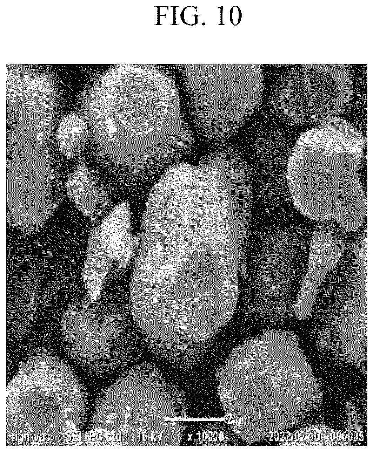

FIG. 9 shows a result of performing SEM analysis measured at x1,000 times on a positive electrode active material of Comparative Example 4, and FIG. 10 shows a result of performing SEM analysis measured at x10,000 times on the positive electrode active material of Comparative Example 4.

Referring to FIGS. 5 to 10, it may be seen that a size of a grain of the positive electrode active material of the Embodiment is larger than that of the positive electrode active material manufactured according to the Comparative Example. For example, it may be expected that a particle diameter of the positive electrode active material of Embodiment 2 is formed larger than that of the positive electrode active material manufactured according to Comparative Example 4 so that the packing density is increased. In addition, the positive electrode active material manufactured according to Embodiment 2 may have fewer pores compared with the positive electrode active material manufactured according to Comparative Example 3, so that a side reaction with the electrolyte may be suppressed.

As a result, as confirmed in Table 2, it may be confirmed that the positive electrode active material of the Embodiments has an improved room temperature initial resistance and an improved high temperature resistance increase rate compared with the Comparative Example so that the life characteristic is improved.

### Experimental Example 3 - measurement of packing density

The packing density is measured by applying a pressure of 4.5 tons after a circular pellet with a diameter of 13 mm is produced using the positive electrode active material manufactured according to the Embodiments and the Comparative Examples.

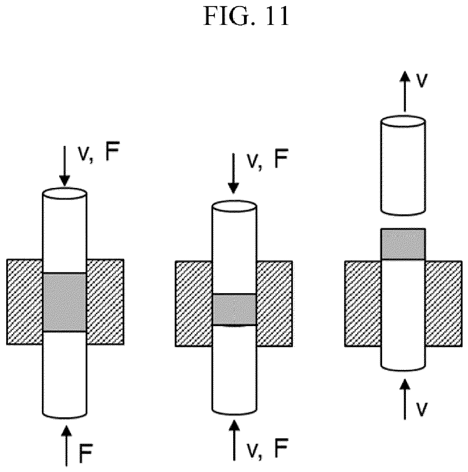

For example, the manufactured pellet is introduced into a packing density measuring device, then a pressure is applied as shown in FIG. 11, and then a height thereof is measured to obtain the packing density. The result is shown in Table 3 below.

### Experimental Example 4 - measurement of amount of gas generated

The amount of gas generated is measured using the following method.

First, a CR2032 coin cell is produced so that charging and discharging are performed with a constant current of 0.1C and full charging is performed with a constant current of 0.2C. Thereafter, the coin cell is disassembled so that only the positive electrode is extracted and then is washed with an EMC electrolyte. Next, an electrolyte is injected after putting the washed positive electrode into a pouch for measuring generation of the gas. Thereafter, the pouch is kept in an oven at 70 degrees for 4 hours, and then the amount of gas generated is measured using a specific gravity meter. The result is shown in Table 3 below.

### Experimental Example 5 - measurement of average particle diameter of active material and specific surface area of precursor

The average particle diameter (D50) of the positive electrode active material manufactured according to the Embodiments and the Comparative Examples is measured using a particle size analyzer.

In addition, a specific surface area of the positive electrode active material precursor manufactured according to the Embodiments and the Comparative Examples is measured using a specific surface area measuring device (e.g., Micromeritics TriStar II 3020). The result is shown in Table 3 below.

**(Table 3)**

| Classifi cation | Composition | Particle form | Packing density (g/cc) | Amount of gas generat ed (cc) | Particle diamete r (D50) (µm) | Specific surface area of precurso r (m²/g) |
|---|---|---|---|---|---|---|
| Compa rative Examp le 1 | Ni_{0.80}Co_{0.10}Mn_{0.10} | Multiparticle | 3.25 | 1 | 8.2 | 9.5 |
| Compa rative Examp le 2 | Ni_{0.80}Co_{0.10}Mn_{0.10} | Small-particle-diameter single particle | 3.05 | 0.8 | 4.1 | 20.5 |
| Embod iment 1 | Ni_{0.80}Co_{0.10}Mn_{0.10} | Medium-particle-diameter single particle | **3.32** | **0.7** | **8.1** | **35.1** |
| Compa rative Examp le 3 | Ni_{0.85}Co_{0.075}Mn_{0.075} | Multiparticle | 3.21 | 1.8 | 7.9 | 8.5 |
| Compa rative Examp le 4 | Ni_{0.85}Co_{0.075}Mn_{0.075} | Small-particle-diameter single particle | 3.04 | 1.2 | 3.8 | 20.2 |
| Embod iment 2 | Ni_{0.85}Co_{0.075}Mn_{0.075} | Medium-particle-diameter single particle | **3.28** | **1.1** | **8.3** | **32.6** |
| Compa rative Examp le 5 | Ni_{0.90}Co_{0.05}Mn_{0.05} | Multiparticle | 3.21 | 2.2 | 9.1 | 9.6 |
| Compa rative Examp le 6 | Ni_{0.90}Co_{0.05}Mn_{0.05} | Small-particle-diameter single particle | 3.08 | 1.6 | 4.2 | 21.2 |
| Embod iment 3 | Ni_{0.90}Co_{0.05}Mn_{0.05} | Medium-particle-diameter single particle | **3.29** | **1.5** | **7.8** | **36.4** |
| Compa rative Examp le 7 | Ni_{0.95}Co_{0.025}Mn_{0.025} | Multiparticle | 3.22 | 4.5 | 8.5 | 10.2 |
| Compa rative Examp le 8 | Ni_{0.95}Co_{0.025}Mn_{0.025} | Small-particle-diameter single particle | 3.07 | 2.1 | 3.9 | 20.8 |
| Embod iment 4 | Ni_{0.95}Co_{0.025}Mn_{0.025} | Medium-particle-diameter single particle | **3.31** | **1.8** | **8.1** | **34.9** |

Referring to Table 3, it may be confirmed that the specific surface area value of the positive electrode active material precursor manufactured according to Embodiments 1 to 4 is very high compared with Comparative Examples 1 to 8. In addition, it may be seen that a packing density value for the positive electrode active material of Embodiments 1 to 4 is superior to that of Comparative Examples 2, 4, 6, and 8 that are the single particle and that of Comparative Examples 1, 3, 5, and 7 that are the multiparticle.

It may be confirmed that the amount of gas generated of Embodiments 1 to 4 is remarkably reduced compared with the multiparticle and the small-particle-diameter single particle having the same composition.

Referring to a measurement result of the average particle diameter (D50), it may be confirmed that the positive electrode active material having a single particle structure of Embodiments 1 to 4 has an average particle diameter (D50) of about medium particle diameter.

The present disclosure is not limited to the embodiments, may be manufactured in various different forms, and a person of ordinary skill in the art to which the present disclosure belongs will be able to understand that the present disclosure may be implemented in other specific forms without changing the technical idea or essential feature of the present disclosure. Therefore, it should be understood that the embodiments described above are illustrative and not limited in all respects.

## Claims

1. A positive electrode active material precursor for a lithium secondary battery comprising metal hydroxide,
wherein the positive electrode active material precursor has a specific surface area of 25 m²/g or more.

2. The positive electrode active material precursor of claim 1, wherein the specific surface area of the positive electrode active material precursor is in a range of 28 to 50 m²/g.

3. The positive electrode active material precursor of claim 1, wherein an average particle diameter (D50) of the precursor is in a range of 2 to 6 µm.

4. The positive electrode active material precursor of claim 1, wherein the metal hydroxide includes nickel, cobalt, and manganese.

5. The positive electrode active material precursor of claim 4, wherein a content of the nickel is 0.8 mol or more based on a total amount of 1 mol of the nickel, the cobalt, and the manganese.

6. A positive electrode active material for a lithium secondary battery comprising metal oxide including a single particle,
wherein the positive electrode active material has a packing density of 3.1 g/cc or more.

7. The positive electrode active material of claim 6, wherein the packing density is in a range of 3.15 to 3.5 g/cc.

8. The positive electrode active material of claim 6, wherein the metal oxide includes nickel, cobalt, and manganese.

9. The positive electrode active material of claim 8, wherein a content of the nickel is 0.8 mol or more based on a total amount of 1 mol of the nickel, the cobalt, and the manganese.

10. The positive electrode active material of claim 6, wherein an average particle diameter (D50) of the positive electrode active material is in a range of 5 to 15 µm.

11. A positive electrode for a lithium secondary battery comprising:
a current collector; and
a positive electrode active material layer that is disposed on at least one surface of the current collector and includes the positive electrode active material according to any one of claims 6 to 10.

12. The positive electrode of claim 11, wherein a density of a pole plate of the positive electrode is in a range of 3.5 to 4.0 g/cc.

13. A lithium secondary battery comprising the positive electrode according to claim 12.
